# EUROPEAN PATENT APPLICATION

(11) **EP 4 779 698 A1**
(43) Date of publication of application: **22.07.2026**
(21) Application number: 25867140.3
(22) Date of filing: 25.09.2025
(51) Int. Cl.: H01M 4/04, B23K 26/38, B65H 5/02, B65H 23/182, H01M 4/13

(54) **ELECTRODE, AND TAB-FORMING SYSTEM FOR MANUFACTURING SAME**

(30) Priority: 15.11.2024 KR 20240163621; 19.09.2025 KR 20250135168
(71) Applicant: LG ENERGY SOLUTION, LTD., Seoul 07335 (KR)
(72) Inventor: PARK, Man Shik, Yuseong-gu, Daejeon 34122 (KR); PARK, Eun Yong, Yuseong-gu, Daejeon 34122 (KR); KWON, Hyeok Yong, Yuseong-gu, Daejeon 34122 (KR)
(74) Representative: Goddar, Heinz J.
(86) International application number: PCT/KR2025/015079
(87) International publication number: WO 2026/106086

(57) **Abstract**

A stacking system according to the present disclosure may include a stack mandrel configured to support at least a part of a folded portion of a separator so that the separator is folded between electrodes and to hold an end portion of the electrode, and a pressure applying device configured to apply pressure to an edge of the separator, wherein the edge of the separator includes an overlapping edge region that overlaps the stack mandrel and a non-overlapping edge region that does not overlap the stack mandrel, and wherein the pressure applying device is configured to apply pressure to the non-overlapping edge region.

## Description

### TECHNICAL FIELD

### CROSS-REFERENCE TO RELATED APPLICATIONS

This application is based on and claims priority from Korean Patent Application No. 10-2024-0163621 filed on November 15, 2024, and Korean Patent Application No. 10-2025-0135168 filed on September 19, 2025 with the Korean Intellectual Property Office, the disclosures of which are incorporated herein in their entirety by reference.

### TECHNICAL FIELD

The present disclosure relates to an electrode and a tab forming system configured to manufacture the same. More particularly, the present disclosure relates to a tab forming system configured to prevent dross generation during the formation of an electrode tab and an electrode manufactured by the same.

### BACKGROUND ART

Secondary batteries may be designed to generate electricity. A secondary battery may include a battery case, an electrode assembly housed in the battery case, and an electrolyte housed in the battery case. The electrode assembly may include a plurality of electrodes and a separator located and stacked between the plurality of electrodes. The electrode may include a current collector and an active material layer located on the current collector. In this instance, the current collector may include a coated portion that overlaps the active material layer and an uncoated portion that does not overlap the active material layer. The uncoated portion of the current collector and a part of the coated portion connected to the uncoated portion may form an electrode tab having a smaller width than a width of the adjacent coated portion. In this instance, a part of the current collector connected to the electrode tab may be referred to as a current collector body. As the electrode tab protrudes from the current collector body, the electrode tab may act as a passage to allow electric charge formed by the active material layer to move outward from the current collector body.

To form the electrode tab, a part of the electrode may be cut. When cutting the electrode, a failure to cut cleanly creates dross which is a sort of impurity. In particular, in case where a laser is used to cut the electrode, when the laser is out of focus, failing to cut the electrode with power enough to cut the electrode cleanly, dross formed from a solid mass of the molten electrode may stick to the electrode tab.

The above-described background is information possessed or acquired by the inventor in the process of arriving at the present disclosure, and is not necessarily the prior art published and known to the general public before the time of filing.

### DISCLOSURE

### TECHNICAL PROBLEM

The present disclosure is designed to solve the above-described problems, and therefore the present disclosure is directed to providing a tab forming system for suppressing dross generation in the formation of an electrode tab and an electrode manufactured through the same.

The technical problems of the present disclosure to be solved are not limited to the above-mentioned technical problems, and these and other technical problems will be clearly understood by persons having ordinary skill in the technical field pertaining to the present disclosure from the following description.

### TECHNICAL SOLUTION

A tab forming system according to an embodiment of the present disclosure is designed to form an electrode tab by cutting a part of an electrode, and includes a laser device configured to generate a laser to cut the electrode, a focus of the laser being movable, and a pattern jig including an electrode support portion configured to support the electrode and having a pattern hole through which the laser passes, wherein the laser device is located at a side opposite to a side where the electrode is located with respect to the electrode support portion, and wherein the electrode support portion curves outwards in a direction in which the laser device faces the pattern hole to place the focus of the laser passing through the pattern hole on the electrode.

The pattern hole may have a curvature corresponding to a curvature of an imaginary surface formed by connecting trajectories of the focus of the laser to place the imaginary surface formed inside on the electrode to be cut by the focus of the laser.

The laser may be configured such that the focus of the laser moves while a translational motion is fixed.

The pattern hole may be formed such that a distance from an end portion of the laser device to the focus of the laser is equal.

An imaginary surface formed inside of the pattern hole may form a part of a sphere.

The electrode support portion may be bent with a same curvature as the pattern hole.

The tab forming system may further include a transport device configured to move the electrode in a movement direction, and the pattern hole may have a curvature with respect to the movement direction.

The transport device may include a transport support, and the transport support may be configured to support the electrode from a side opposite to a side where the pattern jig is located with respect to the electrode.

The electrode support portion may be configured to support the electrode during the movement of the electrode.

The electrode support portion may be configured to apply pressure to the electrode to create tension in the electrode during the movement of the electrode.

The pattern hole may be concave at a center and gradually become wider in cross section as it goes outward from the center.

The pattern jig may include a distant portion extending from the electrode support portion and spaced apart from the electrode.

The distant portion may be configured to be spaced apart from the electrode as it is farther away from the electrode support portion.

The distant portion may be bent closer to the laser device as it is farther away from the electrode support portion.

The electrode may include a coated portion where an active material layer is located, and an uncoated portion where a current collector is exposed, and the pattern hole may be configured to overlap the coated portion and the uncoated portion.

A tab forming system according to an embodiment of the present disclosure is designed to form an electrode tab by cutting a part of an electrode, and includes a laser device configured to generate a laser to cut the electrode, a focus of the laser being movable, and a pattern jig including an electrode support portion configured to support the electrode and having a pattern hole through which the laser passes, wherein the laser device is located at a side opposite to a side where the electrode is located with respect to the electrode support portion, and wherein the pattern hole does not form a plane.

The electrode support portion may curve outwards in a direction in which the laser device faces the pattern hole to place the focus of the laser passing through the pattern hole on the electrode.

The pattern hole may have a curvature corresponding to a curvature of an imaginary surface formed by connecting trajectories of the focus of the laser to place the imaginary surface formed inside on the electrode to be cut by the focus of the laser.

The laser may be configured such that the focus of the laser moves while a translational motion is fixed.

An electrode according to an embodiment of the present disclosure includes an active material layer, a current collector body where the active material layer is located, an electrode tab extending from the current collector body, and an insulating coating layer covering a side and an opposite side of the electrode tab in a thickness direction of the electrode tab, wherein the electrode tab may be prevented from extending toward the insulating coating layer in the thickness direction of the electrode tab and extending beyond the insulating coating layer in a width and length directions of the electrode tab.

The insulating coating layer may cover a side of the electrode tab facing the width or length direction of the electrode tab.

### ADVANTAGEOUS EFFECTS

In the tab forming system according to an embodiment of the present disclosure, the focus of the laser emitted from the laser device used to cut the tab may be located on the electrode during the formation of the electrode tab, thereby preventing dross formation on the electrode tab.

In the tab forming system according to an embodiment of the present disclosure, the laser device may curve outwards in a direction toward the pattern hole to place the focus of the laser on the electrode.

In the tab forming system according to an embodiment of the present disclosure, the pattern jig may support the electrode, thereby preventing wrinkles in the electrode due to the tension created in the electrode during the formation of the electrode tab on the electrode, or preventing vibration-induced shaking, thereby achieving laser focusing with precision.

In the tab forming system according to an embodiment of the present disclosure, the part of the pattern jig that supports the electrode may have the same curvature as the pattern hole, so the curvature may be given to the part of the electrode where the electrode tab is formed by supporting the part of the electrode where the electrode tab is formed during the movement of the electrode.

In the tab forming system according to an embodiment of the present disclosure, the pattern jig may further include the distant portion spaced apart from the electrode at the outside of the electrode support portion that supports the electrode, thereby preventing the distant portion and the electrode from touching, and avoiding damage to the electrode.

The electrode according to an embodiment of the present disclosure may have the above-described effects by including the electrode tab formed by the above-described tab forming system.

The electrode tab of the electrode formed by the tab forming system according to an embodiment of the present disclosure may be prevented from extending toward the insulating coating layer in the thickness direction of the electrode tab, thereby providing the electrode tab having uniform roughness on the side to prevent dross formation at the end portion of the electrode tab.

The electrode tab of the electrode formed by the tab forming system according to an embodiment of the present disclosure may not protrude beyond the insulating coating layer, thereby providing the electrode tab having uniform roughness on the side to prevent dross formation at the end portion of the electrode tab.

The electrode tab of the electrode formed by the tab forming system according to an embodiment of the present disclosure may be fully covered with the insulating coating layer, thereby preventing physical contact with the counter electrode and avoiding short circuits.

The effects that may be obtained from the present disclosure are not limited to the above-mentioned effects, and these and other effects will be clearly understood by persons having ordinary skill in the technical field pertaining to the present disclosure from the following description.

### BRIEF DESCRIPTION OF THE DRAWINGS

FIG. 1 is an assembly diagram of a secondary battery according to a first embodiment of the present disclosure.
FIG. 2 is a perspective view showing an electrode and a tab forming system configured to form an electrode tab of the secondary battery shown in FIG. 1.
FIG. 3 is a conceptual view showing a process of forming an electrode tab using a pattern hole of the tab forming system shown in FIG. 2.
FIG. 4 is a conceptual view showing an electrode and a tab forming system according to a comparative example of the present disclosure when viewed from the side.
FIG. 5 is a perspective view showing the electrode formed by the tab forming system shown in FIG. 4.
FIG. 6 is a conceptual view showing the tab forming system and the electrode shown in FIG. 2.
FIG. 7 is a conceptual view showing the tab forming system and the electrode shown in FIG. 6.
FIG. 8 is a conceptual view showing an electrode and a tab forming system according to a second embodiment of the present disclosure when viewed from above.
FIG. 9 is a perspective view showing a pattern jig according to a third embodiment of the present disclosure.
FIG. 10 is a conceptual view showing an electrode and a tab forming system according to a fourth embodiment of the present disclosure when viewed from the side.
FIG. 11 is a perspective view showing an electrode according to a fifth embodiment of the present disclosure.
FIG. 12 is a perspective view showing an electrode according to a sixth embodiment of the present disclosure.
FIG. 13 is a perspective view showing an electrode according to the seventh embodiment of the present disclosure.

### BEST MODE

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms appropriately for the best explanation.

It should be understood that various embodiments of the present disclosure and the terms used herein are not intended to limit the technical features of the present disclosure to particular embodiments, and include a variety of changes, equivalents or substitutes of the corresponding embodiments.

In relation to the description of the drawings, for the similar or related elements, the similar reference numerals may be used.

The singular form of a noun corresponding to an item may include one or more items unless otherwise indicated by the context.

Each of phrases such as "A or B", "at least one of A and B", "at least one of A or B", "A, B or C", "at least one of A, B and C" and "at least one of A, B or C" as used herein may include any one of the items listed together with the corresponding phrase or all possible combinations of them.

The term "and/or" includes a combination of a plurality of related stated elements or any of the plurality of related stated elements.

The terms such as "first", "second" and so on may be simply used to distinguish the corresponding element from the corresponding other embodiment, and are not intended to limit the corresponding elements in another aspect (for example, importance or order).

When a certain (for example, first) element is referred to as being "coupled" or "connected" to another (for example, second) element with or without the term "functionally" or "through communication", the element may be connected to the other element directly (for example, wiredly), wirelessly or through a third element.

The term "comprise", "include" or "have" indicates the presence of the stated features, figures, steps, operations, elements, components or a combination of them, and does not preclude the presence or addition of one or more other features, figures, steps, operations, elements, components or a combination of them.

When an element is referred to as "being connected to", "being coupled to", "being supported by" or "contacting" another element, this includes not only direct connection, coupling, support or contact of the elements but also indirect connection, coupling, support or contact through a third element.

When an element is referred to as being located "on" another element, the element can contact the other element and intervening elements may be present.

Meanwhile, the terms "top-bottom direction", "lower", and "front-rear direction" as used herein are defined on the basis of the drawings, and the shape and location of each element is not limited by these terms.

Hereinafter, the embodiments according to the present disclosure will be described in detail with reference to the accompanying drawings.

### First embodiment

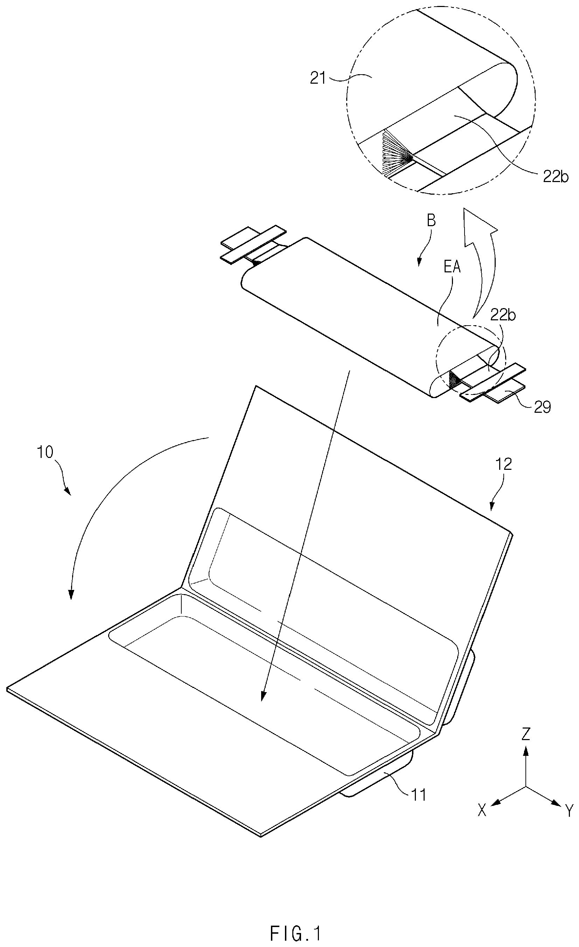

FIG. 1 is an assembly diagram of a secondary battery B according to a first embodiment of the present disclosure.

The secondary battery B according to the first embodiment of the present disclosure will be described with reference to FIG. 1.

The secondary battery B configured to generate electricity may be provided.

As shown in FIG. 1, the secondary battery B may include a battery case 10 and an electrode assembly EA configured to be housed in the battery case 10. The battery case 10 may be an aluminum pouch. However, the battery case 10 may be a cylindrical can or have a prismatic shape according to the need. FIG. 1 may show the secondary battery B that is not yet finished. For reference, in this disclosure, the incomplete secondary battery B may be also referred to as the secondary battery B, and the secondary battery B may be differently interpreted as the secondary battery B that has been completed or is in process depending on the context. The electrode assembly EA may include a plurality of electrodes 20 and a plurality of separators interposed between the plurality of electrodes 20 in an alternating manner with the plurality of electrodes 20. The electrode assembly EA may be housed in an accommodation portion 11 that forms a concave space included in the battery case 10. The battery case 10 may be formed by injecting an electrolyte into the space formed by the accommodation portion 11 after the electrode assembly EA is housed in the accommodation portion 11, and sealing a side portion 12 extending from the accommodation portion 11. In this instance, the sealed side portion 12 may be cut or folded to reduce the occupied volume.

The electrode assembly EA may include the electrode 20. The electrode 20 may include an active material layer 21 including an active material (not shown) including lithium ions, a binder (not shown) and a conductive material (not shown), and a current collector 22 that contacts the active material layer 21 and is configured to move electric charge generated by the active material layer 21. Here, the lithium ions may be replaced with other ions that produce electricity. The current collector 22 may be made of metal and configured to move electric charge. In this instance, the current collector 22 may include a coated portion 23a that overlaps the active material layer 21 and an uncoated portion 23b that does not overlap the active material layer 21.

The uncoated portion 23b of the current collector 22 and a part of the coated portion 23a connected to the uncoated portion 23b may form an electrode tab 22b having a smaller width than a width of the adjacent coated portion 23a. In this instance, a part of the current collector 22 connected to the electrode tab 22b may be referred to as a current collector body 22a. As the electrode tab 22b protrudes from the current collector body 22a, the electrode tab 22b may act as a passage to allow the electric charge formed by the active material layer 21 to move outward from the current collector body 22a. The electrode tab 22b may have a smaller width than a width of the current collector body 22a to seal the side portion 12 of the battery case 10 adjacent to the current collector body 22a that is not connected to the electrode tab 22b in order to prevent electrolyte leakage through the side portion 12 located adjacent to the electrode tab 22b. The electrode tab 22b of each of the plurality of electrodes 20 may be welded together and coupled to a single electrode lead 29, and the electrode lead 29 may be located through the battery case 10. Accordingly, the sealing of the side portion 12 of the battery case 10 adjacent to the electrode lead 29 may be easily unsealed, and to prevent electrolyte leakage, it may be necessary to seal a part of the side portion 12 adjacent to the electrode lead 29 where the electrode lead 29 does not pass through. In this instance, the part of the side portion 12 that seals the electrode lead 29 and the part of the side portion 12 for preventing electrolyte leakage of the electrode lead 29 side may extend in parallel so as to provide a beneficial effect on increasing sealability, and to this end, the electrode tab 22b connected to the electrode lead 29 may have a smaller width than a width of the current collector body 22a.

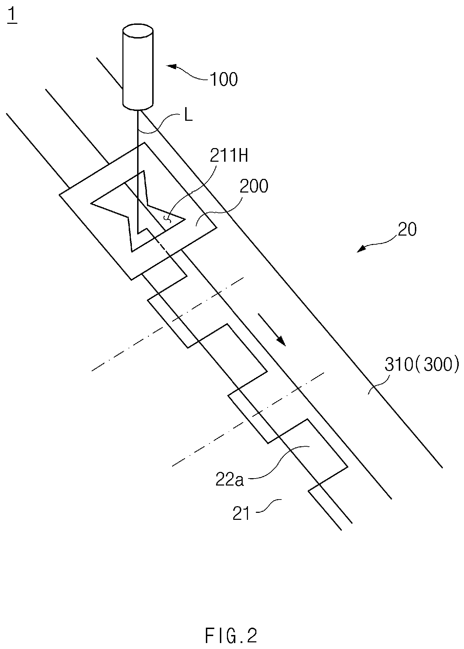

For the electrode tab 22b having a small width, a tab forming system 1 (see FIG. 2) may be provided. Hereinafter, it will be described with reference to the drawings.

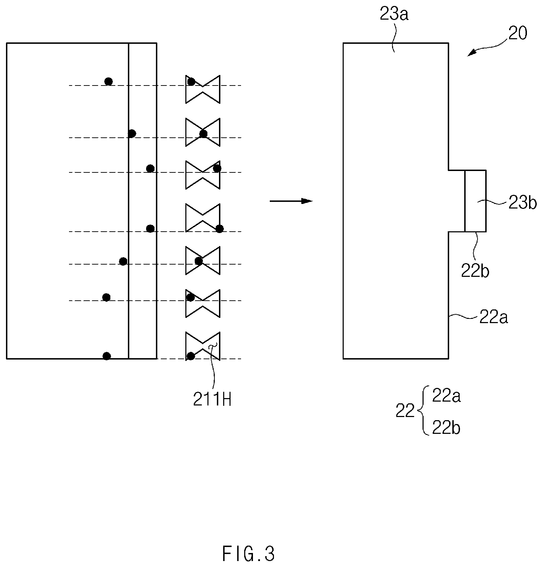

FIG. 2 is a perspective view showing the electrode 20 and the tab forming system 1 configured to form the electrode tab 22b of the secondary battery B shown in FIG. 1. FIG. 3 is a conceptual view showing a process of forming the electrode tab 22b using a pattern hole 211H of the tab forming system 1 shown in FIG. 2.

The tab forming system 1 according to the first embodiment of the present disclosure will be described with reference to FIGS. 2 and 3.

As shown in FIG. 2, the tab forming system 1 may include a transport support 310 where the electrode 20 is located, a laser device 100 to emit a laser L toward the electrode 20, and a pattern jig 200 configured to limit the influence of the laser L emitted from the laser device 100 on areas other than a desired area. In this instance, if needed, the transport support 310 may be omitted, and the transport support 310 may be replaced with another component for the movement of the electrode 20. Accordingly, the transport support 310 may be expanded to and interpreted as a transport device 300 configured to transport the electrode 20. Further, the electrode 20 may be moved by the transport device 300.

Here, the electrode 20 does not refer to the electrode 20 that has been individually cut to form the electrode assembly EA, but may refer to the electrode 20 that is not yet cut before the formation of the completed individual electrode 20. However, in this disclosure, the electrode 20 may refer to the electrode 20 as a finished product or the uncut electrode 20, and may be properly interpreted depending on the context. As shown in FIG. 2, after the electrode tab 22b is formed by cutting a part of the electrode 20 using the laser L, each electrode 20 may be formed by cutting between adjacent electrode tabs 22b. For example, as shown in FIG. 2, the individual electrode 20 may be formed by cutting the electrode 20 along the dashed line. Before cutting, the electrode 20 may extend in a direction, and the coated portion 23a where the active material layer 21 of the current collector 22 is present and the uncoated portion 23b where the active material layer 21 is absent may be located in a sequential order along a direction perpendicular to the direction in which the electrode 20 extends. The electrode tab 22b formed in the electrode 20 may be formed by cutting. In this instance, an imaginary cutting line along which the electrode tab 22b is cut may be located on the coated portion 23a. This is because the active material layer 21 needs to be located on the end portion of the current collector 22 adjacent to the electrode tab 22b, and to this end, the cutting line may be a cutting line located closer to the inside of the coated portion 23a, not a boundary line between the coated portion 23a and the uncoated portion 23b.

The laser device 100 may be used to emit the laser L to cut the electrode 20 by the energy of the laser L to form the electrode tab 22b. As shown in FIG. 2, the laser device 100 disposed at a fixed location may emit the laser L, and the emitted laser L may move along the imaginary cutting line to form the electrode tab 22b. In this instance, the location of the laser device 100 may be fixed, but the laser L may be moved by rotation of the laser device 100.

The pattern jig 200 may be used to precisely place the laser L from the laser device 100 on the imaginary cutting line. The pattern jig 200 may have the pattern hole 211H through which the laser L passes. Only the laser L passing through the pattern hole 211H may be used to cut, and when the laser L is not directed to a desired location, the laser L does not pass through the pattern hole 211H and may be blocked by the pattern jig 200, thereby failing to reach the electrode 20. Accordingly, the laser L may be directed to the desired location.

In this instance, the pattern hole 211H may be concave at the center and gradually become wider in cross section as it goes outward from the center. That is, as shown in FIG. 2, the pattern hole 211H may have a shape of an hourglass placed in the left and right directions. The pattern hole 211H having such a shape will be described with reference to FIG. 3.

In FIG. 3, the location where the laser L passing through the pattern hole 211H hits is indicated in the left image, and the right image shows the location of the laser L on the basis of the pattern hole 211H. The laser L may move within the pattern hole 211H. As shown in FIG. 3, when the electrode 20 is viewed as moving downward, because the pattern jig 200 is at the same fixed location together with the laser L, the electrode 20 may be viewed as moving relatively upward. For convenience of understanding, when the pattern jig 200 and the laser L are viewed as moving upward, the laser L may be viewed as moving along the edge of the pattern hole 211H of the pattern jig 200. In this instance, the cutting line by the laser L may be formed by connecting points indicating the locations where the laser L hits in the image showing the electrode 20 on the left side of the drawing. In this instance, when considering the movement speed of the electrode 20 and the movement direction of the laser L and the movement direction of the electrode 20, the laser L may be moved to form the electrode tab 22b having vertical corners.

As described above, the pattern hole 211H may be used to guide the path of movement of the laser L. However, as described below, a pattern groove according to a comparative example or the pattern jig 200 having the pattern groove may cause a problem.

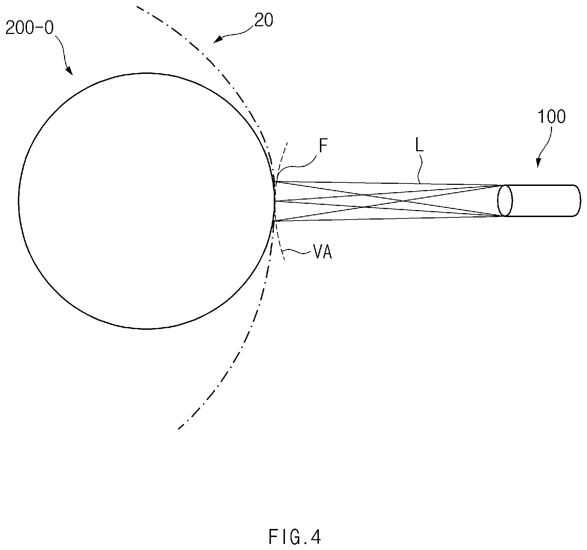

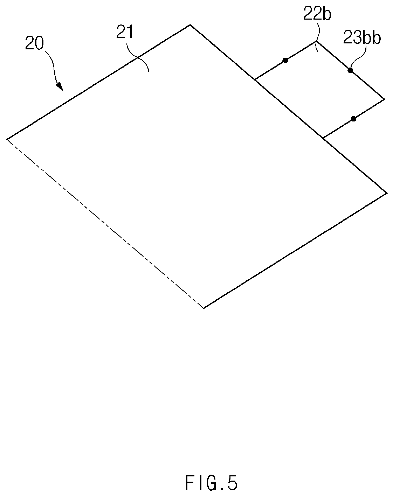

FIG. 4 is a conceptual view showing the electrode 20 and the tab forming system 1 according to the comparative example of the present disclosure when viewed from the side. FIG. 5 is a perspective view showing the electrode 20 formed by the tab forming system 1 shown in FIG. 4.

The pattern jig 200-0 according to the comparative example of the present disclosure will be described with reference to FIGS. 4 and 5.

The pattern jig 200-0 according to the comparative example may be spaced apart from the laser L with the electrode 20 positioned therebetween. In this instance, the pattern jig 200-0 may be configured to support the electrode 20. The pattern jig 200-0 may have a curved surface to support the electrode 20 and apply tension to the electrode 20. In this instance, the curved surface of the pattern jig 200-0 supporting the electrode 20 may curve outwards toward the laser L. In addition, the electrode 20 may be bent outwards toward the laser L when subjected to pressure by the pattern jig 200-0.

The laser L may have a focus F. Because the laser device 100 is disposed at a fixed location, an imaginary plane VA formed by connecting points where the focus F can be moved may form a part of an imaginary sphere. In this instance, the imaginary plane VA may be formed in a direction opposite to the direction in which the electrode 20 is bent. Accordingly, the location where the laser L touches the electrode 20 while moving may not be the focus F of the laser L. A setting value may be formed on the basis of the focus F of the laser L directed to the electrode 20, and when the output of the laser L is stronger, a part of the electrode 20 to be cut may melt in a larger amount than intended, and when the output of the laser L is weaker, the electrode 20 may not be cut properly, so it may be necessary to output the laser L accurately. Considering the foregoing, when the part of the electrode 20 to be cut is not located on the imaginary plane VA formed by the focus F of the laser L like the comparative example, compared to when the focus F is correct, the laser may be irradiated over a wider area, resulting in lower output than required and uncut portions of the electrode tab 22b, or when the output is higher than required, side effects may occur due to the melting of the adjacent current collector.

Accordingly, the electrode tab 22b of the secondary battery B by the tab forming system 1 according to the comparative example may be afflicted with dross 23bb remaining on the electrode tab 22b from a solid mass of the liquefied electrode 20, not vaporized, as shown in FIG. 5.

To prevent the formation of the dross 23bb, the first embodiment of the present disclosure may be provided as follows to place the focus F of the laser L on the electrode 20.

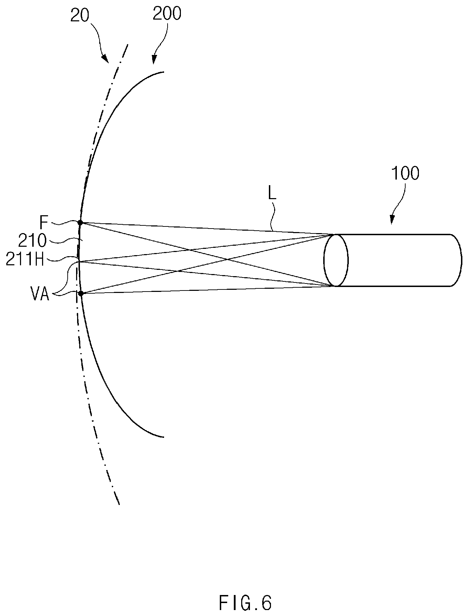

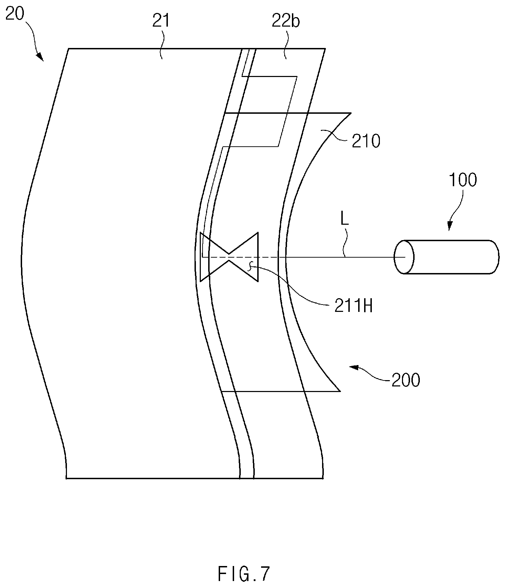

FIG. 6 is a conceptual view showing the tab forming system 1 and the electrode 20 shown in FIG. 2 when viewed from the side. FIG. 7 is a conceptual view showing the tab forming system 1 and the electrode 20 shown in FIG. 6.

The pattern jig 200 according to the first embodiment of the present disclosure will be described with reference to FIGS. 6 and 7.

Although some descriptions overlap the comparative example, for clarity of description, the tab forming system 1 of the first embodiment of the present disclosure will be described again. The tab forming system 1 may form the electrode tab 22b by cutting a part of the electrode 20. The tab forming system 1 may include the laser device 100 and the pattern jig 200 as shown in FIG. 6. The pattern jig 200 may be made of metal. The laser device 100 may be configured to generate the laser L to cut the electrode 20, and the focus F of the laser L can be moved. The pattern jig 200 may include an electrode support portion 210 configured to support the electrode 20 and having the pattern hole 211H through which the laser L passes. In this instance, the laser device 100 may be located at a side opposite to the side where the electrode 20 is located with respect to the electrode support portion 210. The electrode support portion 210 may curve outwards in a direction in which the laser device 100 faces the pattern hole 211H to place the focus F of the laser L passing through the pattern hole 211H on the electrode 20. Accordingly, the pattern hole 211H may have a curvature corresponding to the curvature of the imaginary plane VA formed by connecting the trajectories of the focus F of the laser L to place the imaginary plane VA formed inside on the electrode 20 to be cut by the focus F of the laser L. Accordingly, the trajectories of the focus F of the laser L may be located on the electrode 20 at least on the pattern hole 211H. Because the electrode 20 is subjected to pressure by the electrode support portion 210, tension may be formed in the electrode 20, and a part of the electrode 20 that overlaps the pattern hole 211H may be bent so that it overlaps the inside surface of the pattern hole 211H, and accordingly, the focus F of the laser L located inside of the pattern hole 211H may be located on the part of the electrode 20 that overlaps the pattern hole 211H.

In this instance, the laser L may be configured such that the focus F of the laser L can move while its translational motion is fixed. Accordingly, the imaginary surface VA formed by the focus F of the laser L may form a spherical shape. The pattern hole 211H may be formed such that the distance from the end portion of the laser device 100 to the focus F of the laser L is equal. Accordingly, the imaginary surface VA formed inside of the pattern hole 211H may form a part of a sphere. In this instance, it may include a margin of error, if necessary. Accordingly, as shown in FIG. 7, the imaginary surface VA formed inside of the pattern hole 211H may form a curved surface, not a sphere. Further, the imaginary surface VA formed inside of the pattern hole 211H may still have the above-described effect when it overlaps the imaginary surface VA formed by the focus F of the laser L, and thus it may have a shape other than the spherical shape, if necessary.

In this instance, the electrode support portion 210 may be bent with the same curvature as the pattern hole 211H. When the curvature of the electrode support portion 210 is different from the curvature of the pattern hole 211H, it may be difficult to form the curvature on the imaginary surface VA formed inside of the pattern hole 211H.

Further, the electrode 20 may be transported by the transport device 300 configured to move the electrode 20 in the movement direction as shown in FIG. 7. The pattern hole 211H may have the curvature with respect to the movement direction. That is, the electrode support portion 210 may also have the curvature with respect to the movement direction of the electrode 20. Further, the electrode support portion 210 may not have the curvature with respect to a direction perpendicular to the movement direction of the electrode 20. Accordingly, when the electrode 20 is bent by the electrode support portion 210, pressure may be applied to the electrode 20 to bend the electrode 20 without interfering with the transport of the electrode 20. In other words, the electrode support portion 210 may be configured to support the electrode 20 during the movement of the electrode 20. Accordingly, the electrode support portion 210 may be configured to apply pressure to the electrode 20 to create tension in the electrode 20 during the movement of the electrode 20. When tension and pressure are applied to the electrode 20, it may be possible to reduce vibrations that may be generated during the transport of the electrode 20. Thereby, the focus F of the laser L may be directed to the desired location more precisely.

In this instance, the transport device 300 may include the transport support 310. The transport support 310 may be configured to support the electrode 20 from a side opposite to the side where the pattern jig 200 is located with respect to the electrode 20. The transport support 310 may be deformed when it is subjected to a force, and when the electrode 20 is bent by the pressure applied to the electrode 20 by the electrode support portion 210, the transport support 310 may be bent together with the electrode 20, and may not hinder deformation of the electrode 20.

The pattern jig 200 may include a distant portion 220 extending from the electrode support portion 210 and spaced apart from the electrode 20 as shown in FIG. 6. The distant portion 220 may be spaced apart from the electrode 20 as it is farther away from the electrode support portion 210. Because the distant portion 220 and the electrode 20 are spaced apart from each other, frictional heat generated by physical contact between the electrode 20 and the electrode support portion 210 may be released between the distant portion 220 and the electrode 20. Further, during the formation of the electrode tab 22b, gases formed by the vaporization of the electrode 20 or the electrode 20 debris may move between the distant portion 220 and the electrode 20, making it easy to release them. For reference, the electrode 20 debris may be released by suction from a side opposite to the irradiation site of the laser L. However, if necessary, the electrode 20 debris may be released by suction near the irradiation site of the laser L.

In this instance, the distant portion 220 may be bent closer to the laser device 100 as it is farther away from the electrode support portion 210. Because the pattern jig 200 is made of metal, the laser L emitted from the pattern jig 200 may be reflected on the surface of the pattern jig 200. The distant portion 220 may have a shape of a concave lens to cause the laser L misdirected to the distant portion 220 to bounce away from the electrode 20, not toward the electrode 20, thereby preventing damage to the electrode 20.

Additionally, the electrode 20 may include the coated portion 23a where the active material layer 21 is located and the uncoated portion 23b where the current collector 22 is exposed, and the pattern hole 211H may overlap the coated portion 23a and the uncoated portion 23b.

The secondary battery B formed by the tab forming system 1 may include the electrode tab 22b cut with uniform intensity of the laser L so that the end portion has uniform roughness.

Hereinafter, other embodiment than the first embodiment will be described. The common description with the first embodiment is omitted, and the other embodiment will be described based on differences. In other words, it is obvious that if any, details not described in the other embodiment may be supplemented through the description of the first embodiment.

### Second embodiment

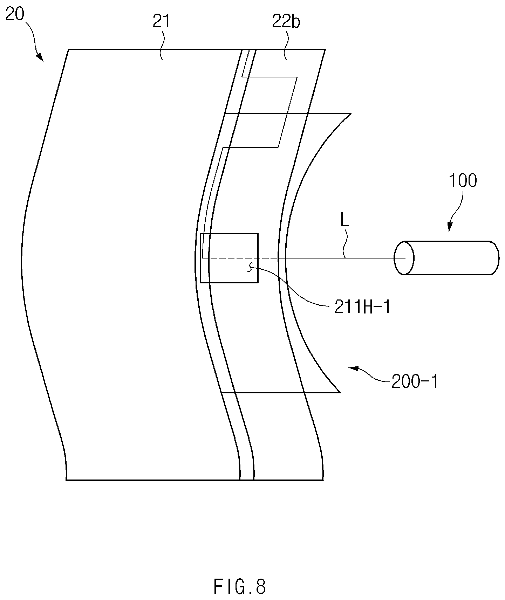

FIG. 8 is a conceptual view showing the electrode 20 and the tab forming system 1 according to a second embodiment of the present disclosure.

The pattern jig 200-1 according to the second embodiment of the present disclosure will be described with reference to FIG. 8.

The second embodiment is different from the first embodiment in that the shape of the pattern hole 211H-1 is different.

The pattern hole 211H-1 included in the pattern jig 200-1 may have a four-sided shape. In other words, the shape of the pattern hole 211H-1 is not limited to the shape of the pattern hole 211H-1 in the first embodiment, and may have any other shape such as the pattern hole 211H-1 in the second embodiment.

### Third embodiment

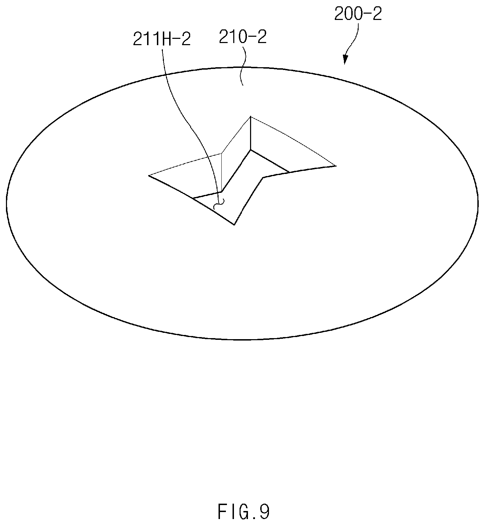

FIG. 9 is a perspective view showing the pattern jig 200-2 according to a third embodiment of the present disclosure.

The pattern jig 200-2 according to the third embodiment of the present disclosure will be described with reference to FIG. 9.

The third embodiment is different from the first embodiment in that the shape of the electrode support portion 210-2 is different.

The imaginary surface VA formed inside of the pattern hole 211H-2 of the pattern jig 200-2 may overlap a part of an imaginary sphere. Further, the electrode support portion 210-2 may be formed with the same curvature as the imaginary surface VA that overlaps the part of the imaginary sphere formed inside of the pattern hole 211H-2 in order to easily form the pattern hole 211H-2 and bend in a spherical shape to place the electrode 20 that contacts the pattern hole 211H-2 on the focus F of the laser L.

### Fourth embodiment

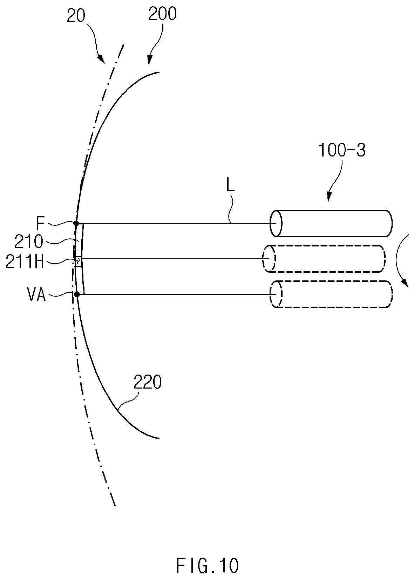

FIG. 10 is a conceptual view showing the electrode 20 and the tab forming system 1 according to a fourth embodiment of the present disclosure when viewed from the side.

The laser device 100-3 according to the fourth embodiment of the present disclosure will be described with reference to FIG. 10.

The fourth embodiment is different from the first embodiment in that the laser device 100-3 can be moved.

The laser device 100-3 may make a translational motion. Accordingly, when the focus F of the laser L formed by the laser device 100-3 while moving forms an imaginary surface VA formed by connecting the focus F, the imaginary surface VA may be formed in a non-spherical shape. In this instance, the pattern hole 211H may be formed such that the inside surface of the pattern hole 211H overlaps the imaginary surface VA formed by connecting the focus F of the laser L.

### Fifth embodiment

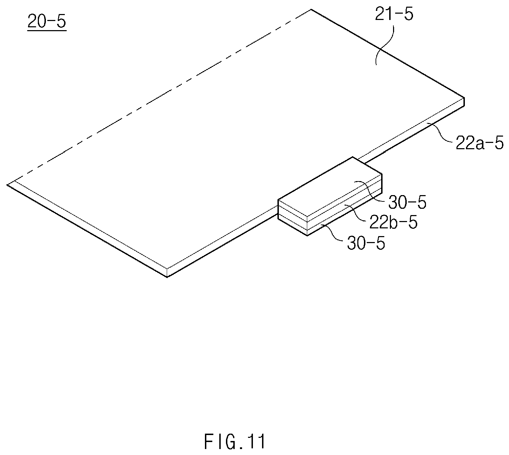

FIG. 11 is a perspective view showing the electrode 20-5 according to a fifth embodiment of the present disclosure.

The electrode 20-5 according to the fifth embodiment of the present disclosure will be described with reference to FIG. 11.

The fifth embodiment is different from the first embodiment in that an insulating coating layer 30-5 may be present on the electrode tab 22b-5.

Specifically, the electrode 20-5 according to the fifth embodiment may further include the insulating coating layer 30-5 that covers one surface and the other surface of the electrode tab 22b-5 in the thickness direction of the electrode tab 22b-5. In other words, the insulating coating layer 30-5 may cover the upper and lower surfaces of the electrode tab 22b-5 in the thickness direction of the electrode tab 22b-5. The insulating coating layer 30-5 may prevent physical contact between the electrode provided by the connected electrode tab 22b-5 and the counter electrode. For example, when the electrode provided by the electrode tab 22b-5 is a positive electrode, the insulating coating layer 30-5 may prevent direct contact between the electrode tab 22b-5 and the negative electrode.

In addition, when the insulating coating layer 30-5 is present on the upper and lower surfaces of the electrode tab 22b-5, it may be possible to prevent the increased thickness or width of the electrode tab 22b-5 caused by dross buildup on the electrode tab 22b-5. In other words, when the insulating coating layer 30-5 is present on the upper and lower surfaces of the electrode tab 22b-5, it may be possible to prevent dross buildup in the thickness direction of the electrode tab 22b-5, and prevent dross buildup in the width direction or length direction of the electrode tab 22b-5.

In addition, the insulating coating layer 30-5 may form a step with the current collector body 22a-5. However, the present disclosure is not limited thereto, and the insulating coating layer 30-5 and the current collector body 22a-5 may be flat to form the same plane without a step.

### Sixth embodiment

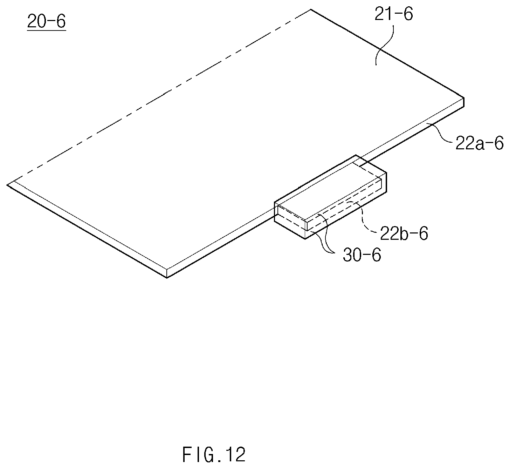

FIG. 12 is a perspective view showing the electrode 20-6 according to the sixth embodiment of the present disclosure.

The electrode 20-6 according to the sixth embodiment of the present disclosure will be described with reference to FIG. 12.

The sixth embodiment is different from the fifth embodiment in that the insulating coating layer 30-6 covers the electrode tab 22b-6.

Specifically, the insulating coating layer 30-6 may be provided to cover the outer surface of the electrode tab 22b-6. In other words, the insulating coating layer 30-6 may be provided to cover the upper surface, the lower surface and the sides of the electrode tab 22b-6, thereby preventing dross build up on the electrode tab 22b-6.

### Seventh embodiment

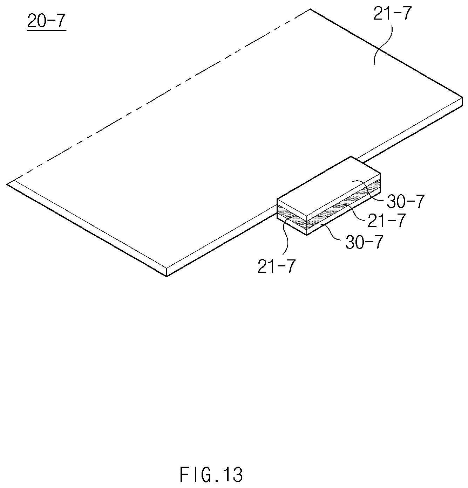

FIG. 13 is a perspective view showing the electrode 20-7 according to a seventh embodiment of the present disclosure.

The electrode 20-7 according to the seventh embodiment of the present disclosure will be described with reference to FIG. 13.

The seventh embodiment is different from the fifth embodiment in that the active material layer 21-7 may cover the sides of the electrode tab.

Specifically, the active material layer 21-7 may be present on the sides of the electrode tab facing the width direction and length direction of the electrode tab. The active material layer 21-7 may be connected to the insulating coating layer 30-7 on the side of the electrode tab. In addition, the active material layer 21-7 may be made of the same material as the active material layer 21-7 applied to the current collector body 22a-7, and formed continuously with the active material layer 21-7 applied to the current collector body 22a-7. However, the present disclosure is not limited thereto, and the active material layer 21-7 may be disposed separately from the active material layer 21-7 applied to the current collector body 22a-7. When the insulating coating layer 30-7 is present on the upper and lower surfaces of the electrode tab and the active material layer 21-7 is present on the side of the electrode tab, it may be possible to prevent dross buildup on the exposed portion of the electrode tab, thereby uniformly maintaining the roughness of the electrode tab.

Unless expressly stated otherwise, the disclosed embodiments may be combined with other embodiments. Alternatively, in combining an embodiment with other embodiment, any combination of embodiments may be made unless expressly limited. It should be understood that such a combination of embodiments is disclosed in the present disclosure.

Although the present disclosure has been hereinabove described with regard to certain embodiments and drawings, the present disclosure is not limited thereto, and the present disclosure may be embodied in different forms by persons having ordinary skill in the technical field pertaining to the present disclosure within the technical aspects of the present disclosure and the appended claims and their equivalents.

### [List of Reference Numerals]

B: Secondary battery
10: Battery case
11: Accommodation portion
12: Side portion
EA: Electrode assembly
20, 20-5, 20-6, 20-7: Electrode
21, 21-5, 21-6, 21-7: Active material layer
22: Current collector
22a, 22a-5, 22a-6, 22a-7: Current collector body
22b, 22b-5, 22b-6: Electrode tab
23a: Coated portion
23b: Uncoated portion
23bb: Dross
29: Electrode lead
30-5, 30-6, 30-7: Insulating coating layer
1: Tab forming system
100, 100-3: Laser device
L: Laser
F: Focus
VA: Imaginary surface
200, 200-0, 200-1, 200-2: Pattern jig
210, 210-2: Electrode support portion
211H, 211H-1, 211H-2: Pattern hole
220: Distant portion
300: Transport device
310: Transport support

## Claims

1. A tab forming system for forming an electrode tab by cutting a part of an electrode, the tab forming system comprising:
a laser device configured to generate a laser to cut the electrode, a focus of the laser being movable; and
a pattern jig including an electrode support portion configured to support the electrode and having a pattern hole through which the laser passes,
wherein the laser device is located at a side opposite to a side where the electrode is located with respect to the electrode support portion, and
wherein the electrode support portion curves outwards in a direction in which the laser device faces the pattern hole to place the focus of the laser passing through the pattern hole on the electrode.

2. The tab forming system according to claim 1,
wherein the pattern hole has a curvature corresponding to a curvature of an imaginary surface formed by connecting trajectories of the focus of the laser to place the imaginary surface formed inside on the electrode to be cut by the focus of the laser.

3. The tab forming system according to claim 1,
wherein the laser is configured such that the focus of the laser moves while a translational motion is fixed.

4. The tab forming system according to claim 1,
wherein the pattern hole is formed such that a distance from an end portion of the laser device to the focus of the laser is equal.

5. The tab forming system according to claim 1,
wherein an imaginary surface formed inside of the pattern hole forms a part of a sphere.

6. The tab forming system according to claim 1,
wherein the electrode support portion is bent with a same curvature as the pattern hole.

7. The tab forming system according to claim 1, further comprising:
a transport device configured to move the electrode in a movement direction,
wherein the pattern hole has a curvature with respect to the movement direction.

8. The tab forming system according to claim 7,
wherein the transport device includes a transport support, and
wherein the transport support is configured to support the electrode from a side opposite to a side where the pattern jig is located with respect to the electrode.

9. The tab forming system according to claim 7,
wherein the electrode support portion is configured to apply pressure to the electrode to create tension in the electrode during the movement of the electrode.

10. The tab forming system according to claim 1,
wherein the pattern hole is concave at a center and gradually becomes wider in cross section as it goes outward from the center.

11. The tab forming system according to claim 1,
wherein the pattern jig includes a distant portion extending from the electrode support portion and spaced apart from the electrode.

12. The tab forming system according to claim 11,
wherein the distant portion is configured to be spaced apart from the electrode as it is farther away from the electrode support portion.

13. The tab forming system according to claim 11,
wherein the distant portion is bent closer to the laser device as it is farther away from the electrode support portion.

14. The tab forming system according to claim 1,
wherein the electrode includes:
a coated portion where an active material layer is located; and
an uncoated portion where a current collector is exposed, and
wherein the pattern hole is configured to overlap the coated portion and the uncoated portion.

15. A tab forming system for forming an electrode tab by cutting a part of an electrode, the tab forming system comprising:
a laser device configured to generate a laser to cut the electrode, a focus of the laser being movable; and
a pattern jig including an electrode support portion configured to support the electrode and having a pattern hole through which the laser passes,
wherein the laser device is located at a side opposite to a side where the electrode is located with respect to the electrode support portion, and
wherein the pattern hole does not form a plane.

16. The tab forming system according to claim 15,
wherein the electrode support portion curves outwards in a direction in which the laser device faces the pattern hole to place the focus of the laser passing through the pattern hole on the electrode.

17. The tab forming system according to claim 15,
wherein the pattern hole has a curvature corresponding to a curvature of an imaginary surface formed by connecting trajectories of the focus of the laser to place the imaginary surface formed inside on the electrode to be cut by the focus of the laser.

18. The tab forming system according to claim 15,
wherein the laser is configured such that the focus of the laser moves while a translational motion is fixed.

19. An electrode comprising:
an active material layer;
a current collector body where the active material layer is located;
an electrode tab extending from the current collector body; and
an insulating coating layer covering a side and an opposite side of the electrode tab in a thickness direction of the electrode tab,
wherein the electrode tab is prevented from extending toward the insulating coating layer in the thickness direction of the electrode tab, and
wherein the electrode tab is prevented from extending beyond the insulating coating layer in a width and length directions of the electrode tab.

20. The electrode according to claim 19,
wherein the insulating coating layer covers a side of the electrode tab facing the width or length direction of the electrode tab.
